# EUROPÄISCHE PATENTSCHRIFT

(11) **EP 2 336 007 B1**
(45) Veröffentlichungstag und Bekanntmachung des Hinweises auf die Patenterteilung: **11.09.2013**
(21) Anmeldenummer: 10007138.0
(22) Anmeldetag: 10.07.2010
(51) Int. Cl.: B62D 21/15, B62D 29/00, B62D 25/02

(54) **Schwellerbaugruppe für eine Fahrzeugkarosserie**
Side sill assembly for a vehicle body
Construction de longeron pour une carrosserie de véhicule

(30) Priorität: 18.12.2009 DE 102009058976
(43) Veröffentlichungstag der Anmeldung: 22.06.2011
(73) Patentinhaber: Audi AG, 85045 Ingolstadt (DE)
(72) Erfinder: WEIGL, Willi, 85095 Zandt (DE); CARLE, Klaus-Dieter, 74074 Heilbronn (DE); RUESS, Marco, 74821 Mosbach (DE)
(74) Vertreter: Engelhardt, Harald

(56) Entgegenhaltungen:
- EP-A1- 1 024 073
- EP-A1- 1 024 074
- EP-A1- 2 014 539
- EP-A2- 1 840 003
- DE-A1-102005 043 698
- JP-A- 2006 264 476

## Beschreibung

Die Erfindung betrifft eine Schwellerbaugruppe für eine Fahrzeugkarosserie nach dem Oberbegriff des Anspruchs 1.

Eine derartige Schwellerbaugruppe für eine selbsttragende Karosserie eines Fahrzeugs ist allgemein bekannt. Beispielsweise befindet sich eine derartige Schwellerbaugruppe unterhalb des Türeinstiegs, auf beiden Seiten des Fahrzeuges, zwischen den Radkästen vorne und hinten. Dem Schweller kommt eine wesentliche Aufgabe bei der Aufnahme von Kräften, zum Beispiel bei einem Frontalzusammenstoß zu. Beim Seitenaufprall ist es dagegen wichtig, im Bereich des Schwellers keine zu hohe Steifigkeit auszubilden, um die Aufprallenergie gezielt abbauen zu können und damit die Eindringgeschwindigkeiten reduzieren zu können. Der Schweller ist regelmäßig kein eigenes Bauteil und setzt sich aus einem Seitenteil, einem Verstärkungsteil und einem Schwellerinnenteil zusammen, welche ein Hohlprofil ausbilden. An das Schwellerinnenteil ist regelmäßig ein Bodenblech gefügt.

Ein derartiger Schweller ist beispielsweise aus der DE 10 2008 020 081 A1 bekannt, bei dem der Schweller als Hohlraum ausgebildet ist und ein Innenblech und ein Außenblech sowie ein Verstärkungsblech aufweist. Im Querschnitt betrachtet, ist das Außenblech und das Innenblech jeweils auf gegenüberliegenden Seiten an einem oberen Flanschbereich des Verstärkungsbleches angebunden. Auf der demgegenüber in Fahrzeughochachsenrichtung gesehen unteren Seite ist dagegen vorgesehen, das Innenblech an einem unteren Flanschüberstand des Verstärkungsbleches anzubinden. Das Verstärkungsblech ist hier in Richtung nach außen stark gewölbt und bildet in etwa in einem mittigen Bereich der Auswölbung, dort wo das Auswölbungsmaximum erreicht ist, einen Anschlussbereich für einen unteren Flanschabschnitt des Außenbleches auf. Das Verstärkungsprofil ist hier weiter auf einer als Aluminiumstrangpressprofil ausgeführten Schwellerblende befestigt.

Ein Schweller eines Kraftfahrzeugs mit einer Verstärkungseinlage ist ferner auch aus der DE 197 08 215 C2 bekannt. Dort ist konkret ein langgezogenes Strangprofilteil aus Leichtmetall vorgesehen, an dem Knotenelemente angebunden sind, die mit angrenzenden Karosserieteilen verbunden werden können. Konkret wird hierdurch ein verstärkter Schweller zur Verfügung gestellt, der insbesondere für den Einsatz in einer Mischbauweise mit einem Materialmix aus Leichtmetall und angrenzenden Stahlblech-Karosserieteilen Verwendung finden kann.

Eine gattungsgemäße Schwellerbaugruppe ist aus der EP 1840 003 A bekannt.

Eine derartige Mischbauweise, bei der herkömmliche Werkstoffe durch leichtere, hochfeste Werkstoffe ersetzt werden sollen, stellt eine vorrangige Aufgabe im modernen Fahrzeugkarosseriebau dar, um zum einen Gewichtseinsparungen vornehmen zu können und zum anderen auch um Fahrzeugkarosserien zur Verfügung zu stellen, die sich trotz gewichtsoptimierter Strukturen nach wie vor durch eine hohe Steifigkeit und Tragfähigkeit der Gesamtkonstruktion auszeichnen.

Es ist daher Aufgabe der vorliegenden Erfindung, eine Schwellerbaugruppe für eine Fahrzeugkarosserie zur Verfügung zu stellen, die sich bei einem gewichtsoptimierten Aufbau gleichzeitig durch eine hohe Steifigkeit und Tragfähigkeit auszeichnet sowie weiter mit einer für einen Großserieneinsatz geeigneten Fügetechnik herstellbar ist.

Diese Aufgabe wird gelöst mit des Merkmalen des unabhängigen Patentanspruchs 1. Vorteilhafte Ausgestaltungen sind Gegenstand der darauf rückbezogenen Unteransprüche.

Gemäß Anspruch 1 ist eine Schwellerbaugruppe für eine Fahrzeugkarosserie vorgesehen, die ein Schwellerinnenteil, ein Schwellerverstärkungsteil und ein Schwellerseitenteil als Schließteil aufweist, die miteinander ein Schwellerhohlprofil ausbilden. Erfindungsgemäß ist das Schwellerseitenteil, im Querschnitt betrachtet, mit einem ersten Anbindungsbereich im Bereich der Schwellerbaugruppe, unmittelbar am Schwellerinnenteil, festgelegt, während zwischen dem Schwellerverstärkungsteil und dem Schwellerseitenteil, die aus unterschiedlichen Werkstoffen bzw. Materialien gefertigt sind, ein Schwellerverbindungsteil als separates Bauteil angeordnet ist, das mit dem Schwellerverstärkungsteil und mit einem zweiten Anbindungsbereich des Schwellerseitenteils fest verbunden ist, wobei bevorzugt vorgesehen ist, dass das Schwellerverbindungsteil aus dem gleichen Werkstoff wie das Schwellerverstärkungsteil oder das Schwellerseitenteil hergestellt ist.

Mit einem derartigen Aufbau ergeben sich erhebliche konstruktive und fertigungstechnische Freiheitsgrade, insbesondere dann, wenn das Schwellerseitenteil zum Beispiel aus einem Leichtmetall, insbesondere einem Aluminium, wie dies nachfolgend am Beispiel eines Aluminium-Schwellerinnenteils noch näher erläutert wird, eingesetzt wird. Beispielsweise lassen sich hier dann Schwellerseitenteile aus einem Leichtmetall mit einer sehr einfachen und damit fertigungstechnisch bzw. ziehtechnisch einfach herstellbaren Geometrie einsetzen.

Durch den Einsatz des Schwellerverbindungsteils als separates Bauteil werden weiterhin erhebliche konstruktive Freiräume geschaffen, die einen für den jeweiligen Einzelfall optimierten Aufbau eines Schwellerhohlprofils ermöglichen. In Verbindung mit diesem Schwellerverbindungsteil ist es dabei von wesentlichem Vorteil, wenn dieses aus dem gleichen Werkstoff wie das Schwellerverstärkungsteil oder das Schwellerseitenteil hergestellt ist, da dann in diesem Fall eine herstellungstechnisch einfache und unkritische Verbindung zwischen zwei Bauteilen aus dem im Wesentlichen gleichen Material hergestellt werden kann.

Das Schwellerseitenteil kann dabei mit seinem anderen Anbindungsbereich, der nicht am Schwellerverbindungsteil festgelegt wird, an unterschiedlichsten Bauteilen der Schwellerbaugruppe festgelegt werden, so zum Beispiel in einer bevorzugten Ausführungsform unmittelbar und direkt am Schwellerinnenteil, wenngleich auch die Anbindung am Schwellerverstärkungsteil oder einem anderen gegebenenfalls zusätzlichen Bauteil der Schwellerbaugruppe ebenfalls grundsätzlich möglich ist.

Gemäß einer besonders bevorzugten Ausgestaltung der vorliegenden Erfindung ist vorgesehen, dass zwischen dem aus Stahl gefertigten Stahl-Schwellerverstärkungsteil und dem aus Aluminium gefertigten Aluminium-Schwellerseitenteil ein aus Aluminium gefertigtes Aluminium-Schwellerverbindungsteil angeordnet ist, das mit dem Stahl-Schwellerverstärkungsteil mittels einer Klebe- und/oder Nietverbindung verbunden ist und das mit dem Aluminium-Schwellerseitenteil mittels ebenfalls einer Klebe- und/oder Nietverbindung oder aber auch durch Warmfügen, insbesondere Laserschweißen verbunden ist. In letzterem Fall lassen sich dann die aneinanderliegenden Flanschbereiche deutlich gegenüber einer Flanschgestaltung für eine Klebe- und/oder Nietverbindung verkürzen. Bevorzugt sind dabei sämtliche Bauteile durch Bleche gebildet. Mit einem derartigen konkreten Aufbau, bei dem sowohl das Schwellerverstärkungsteil als auch das Schwellerverbindungsteil aus einem Leichtmetall, hier beispielsweise Aluminium, hergestellt sind, lässt sich eine besonders gewichtsgünstig optimierte Schwellerbaugruppe realisieren, wobei zudem durch die Laserschweißverbindung oder eine Klebe- und Nietverbindung zwischen dem Aluminium-Schwellerseitenteil und dem Aluminium-Schwellerverbindungsteil einerseits und einer Klebe- und Nietverbindung zwischen dem Stahl-Schwellerverstärkungsteil und dem Aluminium-Verbindungsteil eine hinreichende Hohlraumversiegelung des Hohlprofils erzielt wird und damit ein vorteilhafter Korrosionsschutz in diesem besonders spritzwassergefährdeten Schwellerbereich erzielt wird. Hier, wie auch nachfolgend, wird die Nietverbindung durch eine Mehrzahl von einzelnen, voneinander beabstandeten Nietpunkten gebildet, die bevorzugt durch Vollstanznieten hergestellt sind, wodurch sich eine besonders innige und feste Verbindung zwischen den miteinander zu verbindenden Bauteilen ergibt. Grundsätzlich ist jedoch auch der Einsatz von Halbhohlstanznieten möglich.

Gemäß einer weiteren besonders bevorzugten Ausgestaltung ist vorgesehen, dass das Stahl-Schwellerverstärkungsteil aus einem bevorzugt kaltgeformten Stahl hergestellt und mittels einer Warmfügeverbindung, insbesondere mittels einer Schweißverbindung mit dem aus einem warmgeformten Stahl hergestellten Warmstahl-Schwellerinnenteil verbunden ist. In diesem Fall ist dann bei einer bevorzugten, direkten und unmittelbaren Anbindung des Aluminium-Schwellerseitenteils an dem Warmstahl-Innenteil vorgesehen, dass diese Verbindung mittels einer Klebe- und/oder Nietverbindung erfolgt. Für bestimmte Einsatzfälle kann die hochfeste Nietverbindung aber gegebenenfalls auch durch eine Schraubverbindung ersetzt werden.

Die Begrifflichkeit kaltgeformter und warmgeformter Stahl soll hier zum Ausdruck bringen, dass es sich um unterschiedliche Stahlwerkstoffe bzw. - materialien handelt, die sich vor allem dadurch unterscheiden, dass der warmgeformte Stahl noch höherfester ausgebildet ist als der kaltgeformte Stahl.

Mit der eben aufgezeigten Werkstoffwahl und Ausführungsvariante wird bei einem gleichzeitig gewichtsoptimierten Aufbau eine besonders hohe Steifigkeit und Tragfähigkeit der Schwellerbaugruppe erzielt.

Letzteres ist vor allem auch dann der Fall, wenn gemäß einer weiteren bevorzugten Ausgestaltung vorgesehen ist, dass an dem Warmstahl-Innenteil, im Querschnitt betrachtet, auf der dem Stahl-Schwellerverstärkungsteil abgewandten Seite, ein aus einem zum Beispiel kaltgeformten Stahl hergestellter Stahl-Bodenträger mittels einer Warmfügeverbindung, insbesondere mittels einer Schweißverbindung, und/oder eine aus Aluminium hergestellte Aluminium-Bodenwand mittels einer Klebe- und/oder Nietverbindung angebunden sind. Besonders bevorzugt ist hierbei ein Aufbau, bei dem ein Stahlbodenblech in Fahrzeughochachsenrichtung gesehen beabstandet oberhalb einer Aluminium-Bodenwand in Anbindungsbereich des Stahl-Schwellerverstärkungsteils so, bevorzugt flächig, am Warmstahl-Schwellerinnenteil angebunden ist, dass das Stahl-Schwellerverstärkungsteil und der Stahl-Bodenträger mittels derselben Schweißverbindung am Warmstahl-Schwellerinnenteil festgelegt sind. Dadurch lässt sich der Fertigungsaufwand vorteilhaft reduzieren und gleichzeitig eine hochfeste Verbindung zwischen den einzelnen Bauteilen darstellen.

Das Schwellerinnenteil kann, im Querschnitt betrachtet, bevorzugt eine sich im montierten Zustand an den Schwellerverstärkungs-Anschlussbereich nach oben in Fahrzeughochachsenrichtung hin anschließenden und das Schwellerinnenteil nach oben hin überragenden Schwellerseitenteil-Anschlussbereich aufweisen, an dem das Schwellerseitenteil dann angebunden ist, und zwar bevorzugt in einer flächigen Anlageverbindung anliegend angebunden ist, wodurch sich eine besonders stabile und hochwertige sowie hochfeste Anbindung des Schwellerseitenteils am Schwellerinnenteil ergibt. Für einfache Schwellerseitenteil-Geometrien, was insbesondere in Verbindung mit einem Schwellerseitenteil aus einem Leichtmetall, wie zum Beispiel Aluminium, aus fertigungstechnischer Sicht von Vorteil ist, ist es dabei besonders vorteilhaft, wenn der Schwellerseitenteil-Anschlussbereich in Richtung zum Schwellerseitenteil hin abgekantet ausgebildet ist, und zwar bevorzugt so abgekantet ausgebildet ist, dass sich an einen in etwa in Fahrzeugquerrichtung verlaufenden ersten Abschnitt ein abgewinkelter und sich in etwa Fahrzeughochachsenrichtung erstreckender Flanschabschnitt anschließt, an dem das Schwellerseitenteil in einer flächigen Anlageverbindung anliegt und dort angebunden ist.

Das Schwellerverbindungsteil gemäß der Erfindung selbst weist, im Querschnitt betrachtet, eine in etwa U-förmige Geometrie mit zwei beabstandet gegenüberliegenden, bevorzugt im Wesentlichen parallel zueinander ausgerichteten, U-Schenkeln auf, die eine gleiche als auch eine unterschiedliche Länge aufweisen können. In Verbindung mit derartigen U-Schenkeln ist auf einfache Weise sichergestellt, dass das Schwellerseitenteil und das Schwellerverbindungsteil jeweils in einer flächigen Anlageverbindung an den U-Schenkeln, insbesondere an den voneinander abgewandten Schenkelaußenseiten, anliegen und dort angebunden sein können. Dadurch lässt sich eine hochfeste Verbindung zwischen den einzelnen Bauteilen, insbesondere auch in Verbindung mit einer gewünschten Dichtigkeit in diesem Bereich auf einfache und funktionssichre Weise herstellen.

Wie bereits zuvor dargestellt, lassen sich mit einem erfindungsgemäßen Aufbau einfache Leichtmetall-Schwellerseitenteil-Geometrien realisieren, was aus fertigungstechnischer Sicht von besonderem Vorteil ist. Bevorzugt weist somit das Schwellerseitenteil, im Querschnitt betrachtet, eine im Wesentlichen in Fahrzeughochachsenrichtung verlaufende Längserstreckungsrichtung auf, wobei aber auch bevorzugt in einem mittleren Bereich zwischen den beiden Schwellerseitenteil-Anbindungsbereichen eine nach außen von dem Schwellerinnenteil weggerichtete Auswölbung vorgesehen sein kann, um ein entsprechendes Schwellervolumen auszubilden.

Gemäß einem besonders bevorzugten Verfahren zur Herstellung einer derartigen Schwellerbaugruppe, wie sie zuvor in Verbindung mit der allgemeinen Grundidee und den spezifischeren, bevorzugten Ausführungsformen gewürdigt worden ist, ist vorgesehen, dass das Aluminium-Schwellerverbindungsteil zuerst am Stahl-Schwellerverstärkungsteil angeklebt und/oder angenietet wird, bevorzugt aus Korrosionsschutzgründen dort angeklebt und angenietet wird. Diese so vorgefertigte Baugruppe wird dann am Warmstahl-Innenteil bevorzugt angeschweißt. Gegebenenfalls kann in diesem Zusammenhang gleichzeitig auch die Anbindung eines Stahl-Bodenträgers am Warmstahl-Schwellerinnenteil erfolgen, insbesondere dann, wenn die gleiche Schweißverbindung zur Festlegung des Schwellerverstärkungsteils verwendet wird.

In einem weiteren Verfahrensschritt wird dann das Aluminium-Schwellerseitenteil mit einem ersten Anbindungsbereich am Warmstahl-Schwellerinnenteil angenietet sowie gegebenenfalls angeklebt und mit einem zweiten Anbindungsbereich am Aluminium-Verbindungsteil angenietet sowie gegebenenfalls angeklebt oder mittels Laserschweißen angeschweißt.

Mit einer derartigen Verfahrensführung ist stets eine fertigungstechnisch besonders einfache und bevorzugte Zugänglichkeit zu den einzelnen Anbindungsbereichen gegeben, was den Fertigungsablauf insgesamt wesentlich erleichtert.

Die Erfindung wird nachfolgend anhand einer Zeichnung näher erläutert.

Es zeigen:
- Fig. 1: schematisch einen Ausschnitt aus einem seitlichen Bereich einer Kraftfahrzeugkarosserie mitsamt Schwellerbaugruppe,
- Fig. 2: schematisch einen Schnitt entlang der Linie A-A der Fig. 1, und
- Fig. 3a bis 3d: schematisch die Herstellung einer erfindungsgemäßen Schwellerbaugruppe in den einzelnen Phasen.

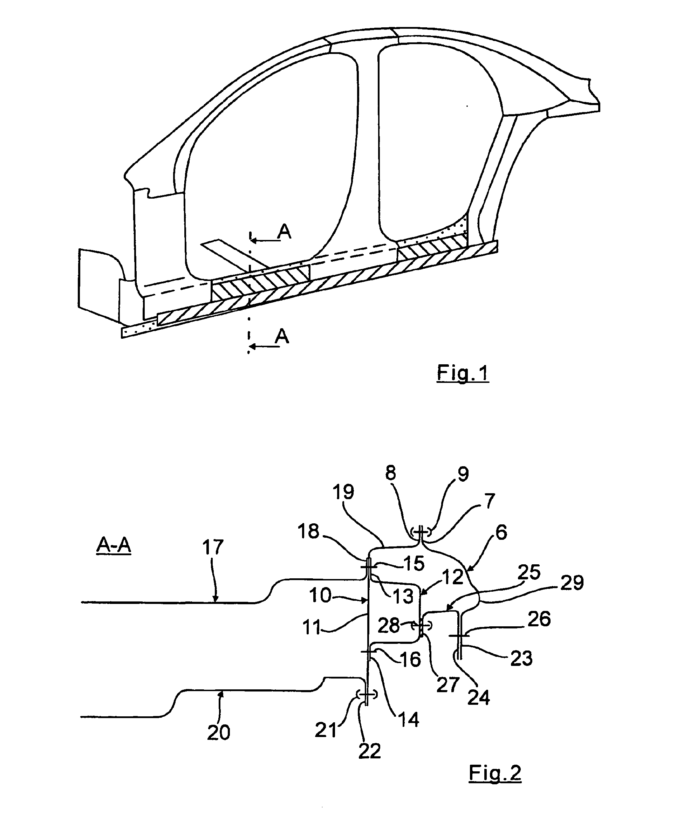

In der Fig. 1 ist schematisch ein seitlicher Ausschnitt aus einer Fahrzeugkarosserie 1 gezeigt, die eine erfindungsgemäße Schwellerbaugruppe 2 aufweist, die sich hier in Fahrzeuglängsachsenrichtung gesehen zwischen einer A-Säule 3 und einer C-Säule 4 erstreckt. Der prinzipielle Aufbau dieser Schwellerbaugruppe ist im genannten Bereich grundsätzlich gleich, auch im Bereich der Anbindung der A-Säule 3, einer B-Säule 5 und einer C-Säule 4 und wird nachfolgend anhand der Schnittdarstellung entlang der Linie A-A der Fig. 1 in Verbindung mit der Fig. 2 näher erläutert.

Die Fig. 2 zeigt eine Schwellerbaugruppe 2 mit einem Aluminium-Schwellerseitenblech 6 als Schwellerseitenteil, das mit einem in Fahrzeughochachsenrichtung gesehen oberen flanschartigen, ersten Anbindungsbereich 7 in einer flächigen Anlageverbindung an einem sich ebenfalls in etwa in Fahrzeughochachsenrichtung erstreckenden Flanschabschnitt 8 mittels einer Nietverbindung 9 angebunden ist. Die Nietverbindung 9 steht hier bevorzugt stellvertretend für eine Vielzahl einzelner Nietverbindungen, die zum Beispiel durch Vollstanznieten hergestellt sind. Falls dies aus Dichtigkeitsgründen bzw. aus Festigkeitsgründen erforderlich sein sollte, können der Flanschabschnitt 8 und der erste Anbindungsbereich 7 des Aluminium-Schwellerseitenblechs 6 auch noch zusätzlich mittels einer hier nicht dargestellten Klebeverbindung miteinander verklebt sein.

Der Flanschabschnitt 8 ist Bestandteil eines Warmstahl-Schwellerinnenblechs 10 als Schwellerinnenteil, das einen ebenen, sich in etwa in Fahrzeughochachsenrichtung verlaufenden Schwellerverstärkungsteil-Anschlussbereich 11 aufweist, an dem ein im Querschnitt betrachtet hutförmiges Stahl-Schwellerverstärkungsblech 12 mit seinen abgewinkelten, flanschartigen Schenkelenden 13, 14 in einer flächigen Anlageverbindung anliegt und mit dem Warmstahl-Schwellerinnenblech mittels jeweils einer Schweißverbindung 15, 16 angebunden ist.

Auf der gegenüberliegenden Seite der Anbindung des Schenkelendes 13 des Stahl-Schwellerverstärkungsblechs 12 ist bevorzugt ein Stahl-Bodenträger 17 mittels eines abgewinkelten Flansches 18 flächig angelegt und ebenfalls mittels der Schweißverbindung 15 am Warmstahl-Schwellerinnenblech 10 angebunden.

Das Warmstahl-Schwellerinnenblech 10 ist, wie dies aus der Fig. 2 ersichtlich ist, zum Aluminium-Schwellerseitenblech 6 hin so abgekantet, dass sich an einen in etwa in Fahrzeugquerrichtung verlaufenden Blechabschnitt 19 der nach oben abgewinkelte Flanschabschnitt 8 anschließt.

An einem in Fahrzeughochachsenrichtung gesehenen unteren Bereich des Schwellerverstärkungsteil-Anschlussbereichs 11 des Warmstahl-Schwellerinnenblechs 10 ist ferner noch eine Aluminiumbodenwand 20 mittels einer Nietverbindung 21 angebunden, die ebenfalls wiederum analog zu der Nietverbindung 9 ausgebildet sein kann. Auch hier ist wiederum bevorzugt vorgesehen, zwischen einem Flanschabschnitt 22 der Aluminium-Bodenwand 20, der in einer flächigen Anlageverbindung an dem Schwellerverstärkungsteil-Anschlussbereich 11 anliegt und eben diesem Schwellerverstärkungsteil-Anschlussbereich 11 eine Klebstoffverbindung vorzusehen, um den Aufbau insgesamt abzudichten und eine besonders hochfeste Anbindung zur Verfügung zu stellen.

Wie dies aus der Fig. 2 weiter ersichtlich ist, ist das Aluminium-Schwellerseitenblech 6 in einem, bezogen auf die Fahrzeughochachsenrichtung, unteren, zweiten Anbindungsbereich 23 mit einem ersten U-Schenkel 24 eines im Querschnitt betrachtet U-förmigen Aluminium-Schwellerverbindungsblechs 25 als Schwellerverbindungsteil in einer flächigen Anlageverbindung mittels einer Niet- und Klebeverbindung oder mittels einer Laserschweißverbindung 26 angebunden. Ein gegenüberliegender, zweiter U-Schenkel 27 des Aluminium-Schwellerverbindungsblechs 25 liegt dagegen in einer flächigen Anlageverbindung an einer Hutbasis des Stahl-Schwellerverstärkungsblechs 12 an und ist mit diesem mittels einer Niet- und Klebeverbindung 28 fest und dicht verbunden.

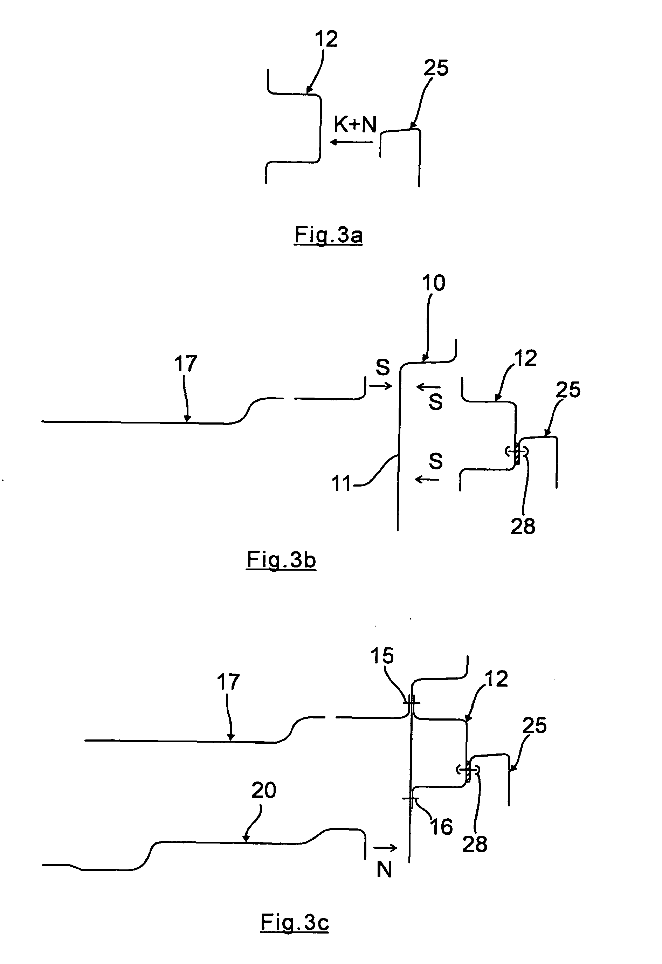

Wie dies der Fig. 2 ferner weiter entnommen werden kann, ist das Aluminium-Schwellerseitenblech 6 im Bereich zwischen den beiden Anbindungsbereichen 7, 22 mit einer nach außen gerichteten, konvexen Auswölbung 29 versehen. Zur Herstellung der Schwellerbaugruppe 2 wird, wie dies nachfolgend anhand der Fig. 3a bis 3d näher erläutert wird, in einem ersten Verfahrensschritt zuerst das Aluminium-Schwellerverbindungsblech 25 mittels einer Niet- und Klebeverbindung (K+N) am hutförmigen Stahl-Verstärkungsblech 12 angebunden. Diese so vorgefertigte Baugruppe wird anschließend mittels einer Schweißverbindung (S) am Warmstahl-Schwellerinnenblech 10 angebunden, und zwar gegebenenfalls gleichzeitig mit dem Stahl-Bodenträger 17.

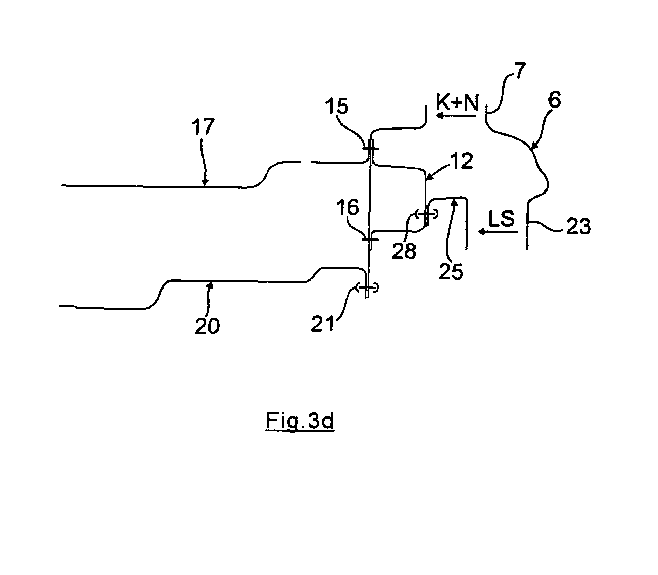

Anschließend wird dann, wie dies in der Fig. 3c dargestellt ist, zum Beispiel die Aluminium-Bodenwand 20 durch Stanznieten (N) am Warmstahl-Schwellerinnenblech 10 angebunden. Auf diese Baugruppe wird dann, wie dies in der Fig. 3d dargestellt ist, das Aluminium-Schwellerseitenblech 6 angebunden, und zwar einmal durch eine Niet- und Klebeverbindung (K+N) im ersten Anbindungsbereich 7 und durch zum Beispiel Laserschweißen (LS) oder durch eine Niet- und Klebeverbindung Schweißen im zweiten Anbindungsbereich 23.

### Bezugszeichen

- 1: Fahrzeugkarosserie
- 2: Schwellerbaugruppe
- 3: A-Säule
- 4: B-Säule
- 5: C-Säule
- 6: Aluminium-Schwellerseitenblech
- 7: erster Anbindungsbereich
- 8: Flanschabschnitt
- 9: Nietverbindung
- 10: Warmstah-Schwellerinnenblech
- 11: Schwellerverstärkungsteil-Anschlussbereich
- 12: Stahl-Schwellerverstärkungsblech
- 13: Schenkelende
- 14: Schenkelende
- 15: Schweißverbindung
- 16: Schweißverbindung
- 17: Stahl-Bodenträger
- 18: Flansch
- 19: Blechabschnitt
- 20: Aluminium-Bodenwand
- 21: Nietverbindung
- 22: Flanschabschnitt
- 23: zweiter Anbindungsbereich
- 24: U-Schenkel
- 25: Aluminium-Schwellerverbindungsblech
- 26: Laserschweißverbindung
- 27: U-Schenkel
- 28: Niet- und Klebeverbindung
- 29: Auswölbung

## Patentansprüche

1. Schwellerbaugruppe für eine Fahrzeugkarosserie, mit einem Schwellerinnenteil, einem Schwellerverstärkungsteil und einem Schwellerseitenteil als Schließteil, die ein Schwellerhohlprofil ausbilden, wobei das Schwellerseitenteil (6), im Querschnitt betrachtet, mit einem ersten Anbindungsbereich (7) im Bereich der Schwellerbaugruppe, festgelegt ist, und wobei zwischen dem Schwellerverstärkungsteil (12) und dem Schwellerseitenteil (6), die aus unterschiedlichen Werkstoffen gefertigt sind, ein Schwellerverbindungsteil (25) als separates Bauteil angeordnet ist, das mit dem Schwellerverstärkungsteil (12) und mit einem zweiten Anbindungsbereich (23) des Schwellerseitenteils (6) fest verbunden ist, **dadurch gekennzeichnet, dass** das Schwellerverbindungsteil (25), im Querschnitt betrachtet, eine in etwa U-förmige Geometrie mit zwei beabstandet gegenüberliegenden U-Schenkeln (24, 27) aufweist, wobei das Schwellerseitenteil (6) und das Schwellerverstärkungsteil (12) jeweils in einer flächigen Anlageverbindung an den voneinander abgewandten Schenkelaußenseiten der U-Schenkel (24, 27) anliegen und dort angebunden sind.

2. Schwellerbaugruppe nach Anspruch 1, **dadurch gekennzeichnet, dass** das Schwellerverbindungsteil (25) aus dem gleichen Werkstoff wie das Schwellerverstärkungsteil (12) oder das Schwellerseitenteil (6) hergestellt ist.

3. Schwellerbaugruppe nach Anspruch 1 oder 2, **dadurch gekennzeichnet, dass** zwischen dem aus Stahl gefertigten Stahl-Schwellerverstärkungsteil (12) und dem aus Aluminium gefertigten Aluminium-Schwellerseitenteil (6) ein aus Aluminium gefertigtes Aluminium-Schwellerverbindungsteil (25) angeordnet ist, das mit dem Stahl-Schwellerverstärkungsteil (12) mittels einer Klebe- und/oder Nietverbindung (28) verbunden ist und das mit dem Aluminium-Schwellerseitenteil mittels einer Niet- und/oder Klebeverbindung oder mittels einer Warmfügeverbindung, insbesondere einer Laserschweißverbindung (26) verbunden ist.

4. Schwellerbaugruppe nach Anspruch 3, **dadurch gekennzeichnet, dass** das Stahl-Schwellerverstärkungsteil (12) aus einem bevorzugt kaltgeformten Stahl hergestellt ist und mittels einer Warmfügeverbindung (15, 16), vorzugsweise einer Schweißverbindung (15, 16), mit dem aus einem warmgeformten Stahl hergestellten Warmstahl-Schwellerinnenteil (10) verbunden ist, und
dass weiter das Aluminium-Schwellerseitenteil (6) mittels einer Klebe- und/oder Nietverbindung (9) mit dem Warmstahl-Schwellerinnenteil (10) verbunden ist.

5. Schwellerbaugruppe nach Anspruch 4, **dadurch gekennzeichnet, dass** an dem Warmstahl-Schwellerinnenteil (10), im Querschnitt betrachtet auf der dem Stahl-Schwellerverstärkungsteil (12) abgewandten Seite, ein aus einem Stahl hergestellter Stahl-Bodenträger (17) mittels einer Warmfügeverbindung (15), insbesondere einer Schweißverbindung, und/oder eine aus Aluminium hergestellte Aluminium-Bodenwand (20) mittels einer Klebe- und/oder Nietverbindung (21) angebunden sind, insbesondere ein Stahl-Bodenträger (17) beabstandet oberhalb einer Aluminium-Bodenwand (20) im Anbindungsbereich des Stahl-Schwellerverstärkungsteils (12) so bevorzugt flächig am Warmstahl-Schwellerinnenteil (10) angebunden ist, dass das Stahl-Schwellerverstärkungsteil (12) und der Stahl-Bodenträger (17) mittels derselben Schweißverbindung (15) am Warmstahl-Schwellerinnenteil (10) festgelegt sind.

6. Schwellerbaugruppe nach einem der Ansprüche 1 bis 5, **dadurch gekennzeichnet, dass** das Schwellerverstärkungsteil (12) eine im Querschnitt betrachtet hut- oder U-förmige Geometrie aufweist und mit seinem, im Querschnitt betrachtet, freien Schenkelenden (13, 14), vorzugsweise mit abgewinkelten Schenkelenden (13, 14) in einer flächigen Anlageverbindung anliegend, an dem Schwellerinnenteil (10) dergestalt angebunden ist, dass das Schwellerverstärkungsteil (12) von dem Schwellerinnenteil (10) in Richtung zum Schwellerseitenteil (6) abragt.

7. Schwellerbaugruppe nach Anspruch 6, **dadurch gekennzeichnet, dass** das Schwellerverstärkungsteil (12) an einem ebenen und/oder im montierten Zustand in etwa in Fahrzeughochachsenrichtung verlaufenden Schwellerverstärkungsteil-Anschlussbereich (11) des Schwellerinnenteils (10) angebunden ist.

8. Schwellerbaugruppe nach einem der Ansprüche 1 bis 7, **dadurch gekennzeichnet, dass** das Schwellerinnenteil (10), im Querschnitt betrachtet, eine sich im montierten Zustand an den Schwellerverstärkungsteil-Anschlussbereich (11) nach oben in Fahrzeughochachsenrichtung hin anschließenden und das Schwellerverstärkungsteil (12) nach oben hin überragenden Schwellerseitenteil-Anschlussbereich aufweist, an dem das Schwellerseitenteil (6) angebunden ist, bevorzugt in einer flächigen Anlageverbindung anliegt und angebunden ist.

9. Schwellerbaugruppe nach Anspruch 8, **dadurch gekennzeichnet,**
**dass** der Schwellerseitenteil-Anschlussbereich in Richtung zum Schwellerseitenteil (6) hin abgekantet ist, höchst bevorzugt so abgekantet ist, dass sich an einen in etwa in Fahrzeugquerrichtung verlaufenden ersten Abschnitt (19) ein abgewinkelter und sich in etwa in Fahrzeughochachsenrichtung erstreckender Flauschabschnitt (8) anschließt, an dem das Schwellerseitenteil (6) in einer flächigen Anlageverbindung anliegt und angebunden ist.

10. Schwellerbaugruppe nach einem der Ansprüche 1 bis 9, **dadurch gekennzeichnet, dass** sich das Schwellerseitenteil (6), im Querschnitt betrachtet, im Wesentlichen in Fahrzeughochachsenrichtung erstreckt, bevorzugt mit einer zwischen den beiden Schwellerseitenteil-Anbindungsbereichen (7; 23) liegenden, nach außen von dem Schwellerinnenteil (10) weggerichteten Auswölbung (29).

## Claims

1. Sill assembly for a vehicle body, comprising a sill inner part, a sill reinforcement part and, as a closing part, a sill lateral part which form a sill hollow profile, the sill lateral part (6), when viewed in cross-section, being fixed via a first fastening region (7) in the region of the sill assembly, and a sill connection part (25) being arranged as a separate component between the sill reinforcement part (12) and the sill lateral part (6), which are made from different materials, which sill connection part is rigidly connected to the sill reinforcement part (12) and to a second fastening region (23) of the sill lateral part (6), **characterised in that** the sill connection part (25), when viewed in cross-section, has an approximately U-shaped geometry having two U-arms (24, 27) which are opposite each other at a spacing, the sill lateral part (6) and the sill reinforcement part (12), in a planar abutting connection, each abut the arm outer faces of the U-arm (24, 27), which face away from each other, and are fastened at this location.

2. Sill assembly according to claim 1, **characterised in that** the sill connection part (25) is produced from the same material as the sill reinforcement part (12) or the sill lateral part (6).

3. Sill assembly according to either claim 1 or claim 2, **characterised in that** an aluminium sill connection part (25) made from aluminium is arranged between the steel sill connection part (12) made from steel and the aluminium sill lateral part (6) made from aluminium, is connected to the steel sill reinforcement part (12) by means of an adhesive connection and/or a rivet connection (28) and is connected to the aluminium sill lateral part by means of a rivet connection and/or an adhesive connection or by means of a heat-joined connection, in particular a laser-welded connection (26).

4. Sill assembly according to claim 3, **characterised in that** the steel sill reinforcement part (12) is produced from a preferably cold-formed steel and is connected by means of a heat-joined connection (15, 16), preferably a welded connection (15, 16), to the hot steel sill inner part (10) produced from a hot-formed steel, and **in that** also the aluminium sill lateral part (6) is connected to the hot steel sill inner part (10) by means of an adhesive connection and/or a rivet connection (9).

5. Sill assembly according to claim 4, **characterised in that** to the hot steel sill inner part (10), on the face facing away from the steel sill reinforcement part (12) when viewed in cross-section, there are fastened, by means of a heat-joined connection (15), in particular a welded connection, a steel base support (17) produced from steel and/or, by means of an adhesive connection and/or a rivet connection (21), an aluminium base wall (20) produced from aluminium, more particularly a steel base support (17) is fastened at a spacing above an aluminium base wall (20), in the fastening region of the steel sill reinforcement part (12), in a preferably planar manner to the hot steel sill inner part (10) in such a way that the steel sill reinforcement part (12) and the steel base support (17) are fixed by means of the same welded connection (15) to the hot steel sill inner part (10).

6. Sill assembly according to any of claims 1 to 5, **characterised in that** the sill reinforcement part (12) has a hat- or U-shaped geometry when viewed in cross-section and is fastened, via the arm ends (13, 14) thereof which are free when viewed in cross-section, preferably via angled arm ends (13, 14) which abut in a planar abutting connection, to the sill inner part (10) in such a manner that the sill reinforcement part (12) protrudes from the sill inner part (10) towards the sill lateral part (6).

7. Sill assembly according to claim 6, **characterised in that** the sill reinforcement part (12) is fastened to a sill reinforcement part attachment region (11) of the sill inner part (10), which sill reinforcement part attachment region is flat and/or extends approximately in the direction of the vertical axis of the vehicle in the assembled state.

8. Sill assembly according to any of claims 1 to 7, **characterised in that** the sill inner part (10), when viewed in cross-section, has a sill lateral part attachment region which, in the assembled state, attaches upwardly in the direction of the vertical axis of the vehicle to the sill reinforcement part attachment region (11) and upwardly projects beyond the sill reinforcement part (12), to which sill lateral part attachment region the sill lateral part (6) is fastened, preferably fastened in abutment in a planar abutting connection.

9. Sill assembly according to claim 8, **characterised in that** the sill lateral part attachment region is folded towards the sill lateral part (6), most preferably folded in such a manner that an angled flange portion (8) extending approximately in the direction of the vertical axis of the vehicle attaches to a first portion (19) extending approximately in the direction of the vertical axis of the vehicle, to which flange portion the sill lateral part (6) is fastened in abutment in a planar abutting connection.

10. Sill assembly according to any of claims 1 to 9, **characterised in that** the sill lateral part (6), when viewed in cross-section, extends substantially in the direction of the vertical axis of the vehicle, preferably having a protrusion (29) located between the two sill lateral part fastening regions (7; 23) and directed outwardly from the sill inner part (10).

## Revendications

1. Assemblage de seuil de porte pour une carrosserie automobile, comprenant une partie interne de seuil, une partie de renfort de seuil et une partie latérale de seuil comme partie de fermeture, qui constituent un profilé creux de seuil de porte, dans lequel la partie latérale (6) du seuil, considérée en section transversale, est fixée à une première zone d'attache (7) dans la zone de l'assemblage de seuil, et dans lequel il est agencé entre la partie de renfort de seuil (12) et la partie latérale de seuil (6), qui sont constituées de matériaux différents, une partie de liaison de seuil (25) sous la forme d'une pièce séparée, qui est solidement reliée à la partie de renfort de seuil (12) et à une seconde zone d'attache (23) de la partie latérale de seuil (6), **caractérisé en ce que** la partie de liaison de seuil (25), considérée en section transversale, présente une géométrie plus ou moins en forme de U avec deux branches (24, 27) du U en regard l'une de l'autre, dans lequel la partie latérale (6) du seuil et la partie de renfort (12) du seuil s'appliquent respectivement via une liaison d'appui plate sur les côtés externes des branches en U (24, 27) opposées l'une à l'autre et y sont fixées.

2. Assemblage de seuil de porte selon la revendication 1, **caractérisé en ce que** la partie de liaison (25) du seuil de porte est fabriquée dans le même matériau que la partie de renfort (12) du seuil ou la partie latérale (6) du seuil.

3. Assemblage de seuil de porte selon la revendication 1 ou la revendication 2, **caractérisé en ce qu'**il est aménagé entre la partie de renfort (12) du seuil fabriquée en acier et la partie latérale (6) du seuil fabriquée en aluminium une partie de liaison (25) du seuil fabriquée en aluminium, qui est reliée à la partie de renfort (12) du seuil d'acier au moyen d'une liaison adhésive et/ou rivetée (28) et la partie latérale du seuil d'aluminium est reliée au moyen d'une liaison rivetée et/ou adhésive ou au moyen d'une liaison par jonction thermique, en particulier une liaison de soudage au laser (26).

4. Assemblage de seuil de porte selon la revendication 3, **caractérisé en ce que** la partie de renfort (12) du seuil d'acier est fabriquée en acier de préférence façonné à froid et est reliée, au moyen d'une liaison par jonction thermique (15, 16), de préférence une liaison de soudage (15, 16) avec la partie interne (10) du seuil fabriquée en acier façonné à chaud, et
la partie latérale (6) du seuil d'aluminium est par ailleurs liée à la partie interne (10) du seuil d'acier façonné à chaud au moyen d'une liaison adhésive et/ou rivetée (9).

5. Assemblage de seuil de porte selon la revendication 4, **caractérisé en ce que** sont reliées, sur la partie interne (10) du seuil en acier façonné à chaud, considérée en section transversale, sur le côté opposé à la partie de renfort (12) du seuil d'acier, une poutre de fond (17) fabriquée en acier au moyen d'une liaison par jonction thermique (15), en particulier une liaison de soudage, et/ou une paroi de fond (20) fabriquée en aluminium au moyen d'une liaison adhésive et/ou rivetée (21), en particulier une poutre de fond en acier (17) est reliée à distance au-dessus d'une paroi de fond en aluminium (20) dans la zone de liaison de la partie de renfort (12) du seuil d'acier, de préférence à plat sur la partie interne (10) du seuil d'acier façonné à chaud de sorte que la partie de renfort (12) du seuil d'acier et la poutre de fond en acier (17) soient fixées au moyen de la même liaison de soudage (15) sur la partie interne (10) du seuil en acier façonné à chaud.

6. Assemblage de seuil de porte selon l'une quelconque des revendications 1 à 5, **caractérisé en ce que** la partie de renfort (12) du seuil présente, considérée en section transversale, une géométrie en forme de chape ou de U et est reliée avec ses extrémités de branches libres (13, 14) considérées en section transversale, de préférence avec des extrémités de branches en U (13, 14) s'appliquant via une liaison d'appui plate sur la partie interne (10) du seuil de sorte que la partie de renfort (12) du seuil dépasse de la partie interne (10) du seuil dans la direction de la partie latérale (6) du seuil.

7. Assemblage de seuil de porte selon la revendication 6, **caractérisé en ce que** la partie de renfort (12) du seuil de porte est liée dans la zone de raccordement (11) de la partie de renfort du seuil et de la partie interne (10) du seuil s'étendant plus ou moins dans la direction de l'axe vertical du véhicule.

8. Assemblage de seuil de porte selon l'une quelconque des revendications 1 à 7, **caractérisé en ce que** la partie interne (10) du seuil, considérée en section transversale, présente une zone de raccordement de la partie latérale du seuil se raccordant à l'état monté sur la zone de raccordement (11) de la partie de renfort du seuil vers le haut dans la direction de l'axe vertical du véhicule et faisant saillie vers le haut de la partie de renfort (12) du seuil, à laquelle zone de raccordement la partie latérale (6) du seuil est liée, de préférence s'applique via une liaison d'appui plate et y est fixée.

9. Assemblage de seuil de porte selon la revendication 8, **caractérisé en ce que** la zone de raccordement de la partie latérale du seuil est arrondie dans la direction de la partie latérale (6) du seuil, de préférence assez fortement arrondie pour qu'une section bridée (8) repliée et s'étendant plus ou moins dans la direction de l'axe vertical du véhicule se raccorde à une première section (19) s'étendant plus ou moins dans la direction transversale au véhicule, à laquelle section bridée la partie latérale (6) du seuil est adjacente dans une liaison d'appui plate et y est fixée.

10. Assemblage de seuil de porte selon l'une quelconque des revendications 1 à 9, **caractérisé en ce que** la partie latérale (6) du seuil, considérée en section transversale, s'étend sensiblement dans la direction de l'axe vertical du véhicule, de préférence avec un bombement (29) qui se trouve entre les deux zones d'attache (7 ; 23) de la partie latérale du seuil de porte et est tournée à l'opposé de la partie intérieure (10) du seuil vers l'extérieur.
